(19) **Europäisches Patentamt**
**European Patent Office**
**Office européen des brevets**

(11) **EP 2 019 195 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(51) Int Cl.:
*F02D 41/40* *(2006.01)*    *F02D 41/14* *(2006.01)*

(21) Anmeldenummer: **08104355.6**

(22) Anmeldetag: **11.06.2008**

(54) **Verfahren zur Bestimmung der eingespritzten Kraftstoffmenge**

Method for determining the amount of fuel injected

Procédé de détermination de la quantité de carburant injectée

(84) Benannte Vertragsstaaten:
**DE FR GB IT**

(72) Erfinder:
• **Schulz, Oliver**
**70327, Stuttgart (DE)**
• **Becker, Oliver**
**69198, Schriessheim (DE)**
• **Peck, Rainer**
**71636, Ludwigsburg (DE)**

(30) Priorität: **24.07.2007 DE 102007034337**

(43) Veröffentlichungstag der Anmeldung:
**28.01.2009 Patentblatt 2009/05**

(73) Patentinhaber: **Robert Bosch GmbH**
**70442 Stuttgart (DE)**

(56) Entgegenhaltungen:
**EP-A- 1 375 887**    **WO-A-2004/090315**
**WO-A-2005/021953**    **DE-A1-102005 036 191**
**DE-A1-102005 051 701**    **DE-A1-102006 000 530**

**Beschreibung**

Stand der Technik

Die Erfindung betrifft ein Verfahren zur Bestimmung einer in wenigstens einen Brennraum einer Brennkraftmaschine eingespritzten Kraftstoffmasse sowie eine Vorrichtung zur Durchführung des Verfahrens nach der Gattung der unabhängigen Ansprüche.

Aus der DE 10 2006 00 530 A1 ist eine Kraftstoffeinspritzvorrichtung bekannt. Bei dieser Kraftstoffeinspritzvorrichtung saugt eine Kraftstoffpumpe Kraftstoff von einem Kraftstofftank an und fügt dem Kraftstoff mit Druck einem Common Rail zu. Der in dem Rail befindliche Kraftstoff wird durch ein Kraftstoffeinspritzventil eingespritzt. Eine Soll-Einspritzzeitdauer des Kraftstoffeinspritzventils wird basierend auf dem Kraftstoffdruck, der durch einen Kraftstoffdrucksensor erfasst wird und einer Solleinspritzmenge berechnet. Wenn eine Kraftstoffeinspritzung, deren Kraftstoffzeitdauer sich mit einer Kraftstoffdruckzufuhrzeitdauer der Kraftstoffpumpe überlappt, durchgeführt wird, wird ein Anstiegsbetrag des Kraftstoffdrucks in Folge der Druckzuführung während der Kraftstoffeinspritzzeitdauer, basierend auf mehreren Stichprobenwerten des Kraftstoffdrucks, vorhergesagt, die durch den Kraftstoffdrucksensor erfasst werden. Die Solleinspritzzeitdauer wird basierend auf dem Anstiegsbetrag des Kraftstoffdrucks, eingestellt.

Für den Betrieb moderner Brennkraftmaschinen, insbesondere selbsteinspritzender Dieselmotoren ist eine hochgenaue Zumessung der Kraftstoffmasse bei sehr hohen Einspritzdrücken erforderlich. Die Präzision der gesteuerten Kraftstoff-Zumessung wird jedoch bei modernen Einspritzsystemen einerseits durch die Fertigungsgenauigkeit und andererseits durch sich über die Laufzeit der Brennkraftmaschine verändernde Eigenschaften der Komponenten des Einspritzsystems, insbesondere DriftErscheinungen, welche beispielsweise zu erhöhten Toleranzen führen, beschränkt. Zudem werden aufgrund der einzelnen Einspritzungen Druckwellen in der Kraftstoffzuleitung und im Einspritzventil ausgelöst. Diese Druckwellen führen - je nach Einspritzmenge und zeitlichen Abständen zwischen zwei Einspritzungen - zu einer Ungenauigkeit der zeitlich zweiten Kraftstoffzumessung. Zur Kompensation der durch die Druckwellen hervorgerufenen Ungenauigkeiten kann beispielsweise das aus der DE 10 2004 053 418 A1 hervorgehende Verfahren zur Steuerung eines Einspritzsystems einer Brennkraftmaschine herangezogen werden, bei dem die Druckwellenkompensation auf der Grundlage von zeitlich im Wesentlichen wellenförmig verlaufenden Ansteuerdauern durchgeführt wird und die Steuerung wenigstens eines Injektors mittels zeitlich wellenförmig verlaufender Ansteuerdauern Druckwellen korrigiert wird.

Die DE 10 2005 036 193 A1 beschreibt ein Verfahren zur Steuerung eines wenigstens einen Injektor aufweisenden Einspritzsystems einer Brennkraftmaschine, wobei die Kraftstoffzumessung in eine erste Teileinspritzung und wenigstens eine weitere Teileinspritzung aufgeteilt ist und wobei ein die mittels des wenigstens einen Injektors einzuspritzende Kraftstoffmenge bestimmendes Steuersignal in Abhängigkeit von einer Druckwellenbeeinflussung der wenigstens zweiten Teileinspritzung korrigiert wird. Die Druckwellenkorrektur wird auf der Grundlage eines physikalischen Modells durchgeführt, welches die Wirkung der Druckwelle auf das Öffnungsverhalten des wenigstens einen Injektors, jeweils voneinander entkoppelt, beschreibt.

Durch diese Verfahren ist jeweils eine "gesteuerte Korrektur" möglich. Problematisch ist nun, dass Drifterscheinungen des gesamten Einspritzsystems hierbei nicht berücksichtigt werden können, vielmehr ist es so, dass derartige Drifterscheinungen, beispielsweise aufgrund vergrößerter Toleranzen, auch eine Verschlechterung der Druckwellenkorrektur-Güte zur Folge haben. Auch kann die Güte der Druckwellenkorrektur bislang nicht im Fahrbetrieb überwacht und gegebenenfalls nachkorrigiert werden.

Offenbarung der Erfindung

Vorteile der Erfindung

Das erfindungsgemäße Verfahren mit den Merkmalen des unabhängigen Anspruchs 1 ermöglicht es, die in wenigstens einen Brennraum einer Brennkraftmaschine mittels wenigstens einer Einspritzung unter hohem Druck eingespritzte Kraftstoffmenge sehr genau zu bestimmen. Das Verfahren ermöglicht es, die real eingespritzte Kraftstoffmasse und das Verhältnis zwischen realer und gewünschter Einspritzmenge zu bestimmen. Dabei wird aufgrund eines Vergleichs eines Maßes für die Istmenge des eingespritzten Kraftstoffs wenigstens einer Testeinspritzung, die aufgrund eines Maßes für eine vorgegebene Sollmenge vorgenommen wird, mit dem Maß für die Sollmenge eine Korrekturgröße festgelegt. Mittels dieser Korrekturgröße wird dann die vorbeschriebene Druckwellenkorrektur-Funktion korrigiert, das heißt beispielsweise an Drifterscheinungen, die aufgrund von Toleranzen an den Einspritzventilen entstehen, angepasst und so eine korrekte Einspritzmenge sichergestellt. Hierdurch ist es möglich, die durch die Druckwellen hervorgerufenen Mengenänderungen im Fahrbetrieb zu messen.

Vorteilhafte Weiterbildungen und Ausgestaltungen der erfindungsgemäßen Vorgehensweise ergeben sich aus den abhängigen Ansprüchen.

So wird bevorzugt die wenigstens eine Testeinspritzung als nicht momentenwirksame Nacheinspritzung vorgenommen, die den Motorbetrieb nicht beeinträchtigt.

Vorteilhafterweise werden eine oder auch zwei Testeinspritzungen mit veränderlichen zeitlichen Abständen und vorzugsweise zwischen zwei Einspritzungen abgesetzt. Mit der dabei erhaltenen Information kann zum Beispiel die Phasenlage der bereits bestehenden Druckwellenkorrektur-Funktion aktuellen Bedürfnissen, beispielsweise Änderungen des Einspritzverhaltens aufgrund von Drifts der Einspritzventile, angepasst werden.

Gemäß einer alternativen Ausgestaltung des Verfahrens werden aufgrund der Korrekturgröße Änderungen in einem Ansteuerdauerkennfeld vorgenommen.

Eine Ausgestaltung des erfindungsgemäßen Verfahrens sieht vor, dass das Maß für die Istmenge aus einem im Abgasbereich gemessenen Lambdasignal ermittelt wird. Mit dieser Maßnahme kann das von einem im Abgasbereich ohnehin zur Lambdaregelung angeordneten Lambdasensor bereitgestellte Sensorsignal herangezogen werden zur Ermittlung des Maßes für die Istmenge.

Eine wiederum andere Ausgestaltung sieht eine Berechnung der im Abgasbereich auftretenden Luftzahl Lambda vor.

Bevorzugt wird die Korrekturgröße im Rahmen eines periodisch stattfindenden Lernverfahrens festgelegt, das in vorgegebenen Betriebszuständen der Brennkraftmaschine durchgeführt wird.

Die im Rahmen des Lernverfahrens ermittelten Korrekturgrößen und die Maße für die Istmengen des eingespritzten Kraftstoffs sowie für die Sollmengen des eingespritzten Kraftstoffs werden vorteilhafterweise in einem Lern-Kennfeld abgelegt, auf das später im Betrieb leicht zurückgegriffen werden kann.

Als Maß für die eingespritzte Kraftstoffmasse kann die eingespritzte Kraftstoffmenge oder eine die eingespritzte Kraftstoffmenge charakterisierende Ansteuergröße, z.B. die Ansteuerdauer, herangezogen werden.

Die Nacheinspritzung zur Ermittlung der Korrekturgröße kann bei einer ersten Ausgestaltung des Verfahrens aufgrund einer Nacheinspritzung in einen Brennraum einer mindestens einen Brennraum aufweisenden Brennkraftmaschine ermittelt werden. Auf diese Weise kann injektorindividuell ein Lern-Kennfeld ermittelt werden, sodass eine zylinderindividuelle Korrektur der Einspritzung möglich ist.

Eine andere Ausgestaltung sieht vor, die Korrekturgröße aufgrund einer Nacheinspritzung in alle Brennräume einer mehrere Brennräume aufweisenden Brennkraftmaschine zu ermitteln. Diese Maßnahme hat den Vorteil, dass die mittlere Abweichung aller Injektoren vom Sollwert ermittelt und entsprechend korrigiert werden kann.

Die erfindungsgemäße Vorrichtung zum Betreiben einer Brennkraftmaschine betrifft zunächst ein Steuergerät, das zur Durchführung des Verfahrens hergerichtet ist. Das Steuergerät umfasst vorzugsweise wenigstens einen elektrischen Speicher, in dem die Verfahrensschritte als Computerprogramm abgelegt sind. Das Steuergerät umfasst ferner vorzugsweise einen speziellen Speicher, in welchem die unterschiedlichen Werte der Korrekturgröße abgelegt werden.

Zeichnung

Ausführungsbeispiele der Erfindung sind in der Zeichnung dargestellt und in der nachfolgenden Beschreibung näher erläutert.

Ausführungsformen der Erfindung

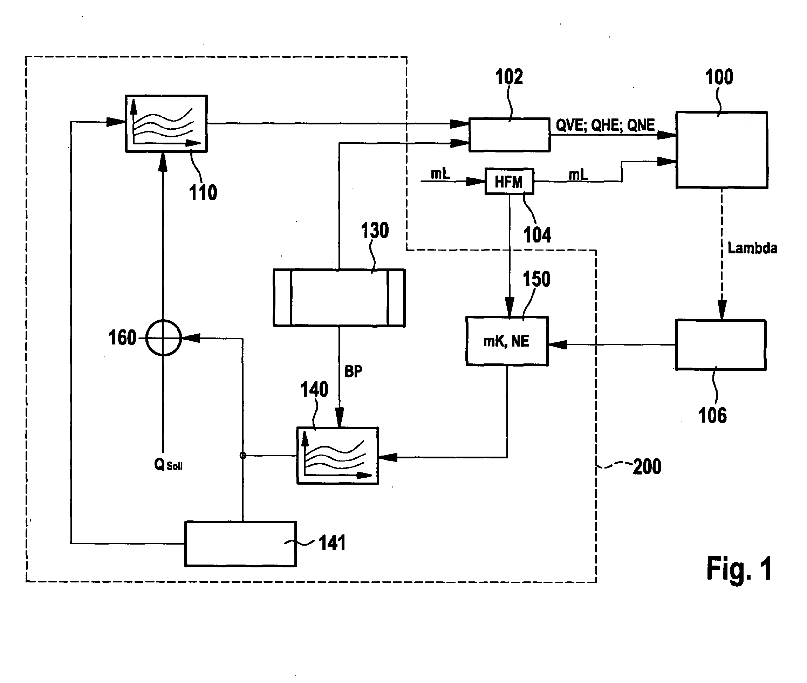

Die Figur zeigt Funktionsblöcke, die zur Durchführung eines erfindungsgemäßen Verfahrens zum Betreiben einer Brennkraftmaschine geeignet sind. In Fig. 1 ist eine Brennkraftmaschine 100 dargestellt, die vorzugsweise mehrere Brennräume, beispielsweise vier Brennräume aufweist, in die mittels Injektoren Kraftstoff eingespritzt wird. Der Brennkraftmaschine 100 wird ferner eine Luftmasse $m_L$ zugeführt, die mittels einer geeigneten Einrichtung 104, beispielsweise mittels eines Heißfilmluftmassenmessers HFM auf an sich bekannte Weise erfasst wird.

Die Ansteuerung der Injektoren 102 erfolgt gesteuert mithilfe eines Ansteuerdauerkennfelds 110, aus dem die einer gewünschten Sollmenge QSoll zugeordnete Ansteuerdauer der Injektoren 102, mittels denen der Kraftstoff in die Brennräume eingespritzt wird, entnehmbar ist. Dabei erfolgen die Einspritzungen auf an sich bekannte Weise in vorgegebener zeitlicher Abfolge. Zum Beispiel kann auf eine Voreinspritzung QVE eine Haupteinspritzung QHE und auf diese eine Nacheinspritzung QNE folgen. Zur Regelung der Diesel-Brennkraftmaschinen 100 ist nun eine hochgenaue Zumessung der Kraftstoffmasse bei sehr hohen Einspritzdrücken erforderlich. Die erreichbare Genauigkeit der gesteuerten Kraftstoff-Zumessung bei modernen Einspritzsystemen wird jedoch einerseits durch die Fertigungsgenauigkeit und andererseits durch ein Driften der Bauteile während des Betriebs der Brennkraftmaschine, beispielsweise aufgrund Verschleißes und dergleichen beschränkt. Eine hochgenaue Zumessung des Kraftstoffs ist nicht nur hinsichtlich der Emission der Brennkraftmaschine erforderlich, sondern auch im Hinblick darauf, dass aufgrund ungenauer Zumessung der Kraftstoffe nicht nur Verschlechterungen der Emissionen, sondern auch Schäden der Brennkraftmaschine oder eines Abgasnachbehandlungssystems, beispielsweise zur Dieselpartikelfilterregeneration, auftreten können.

Um nun die tatsächlich eingespritzte Kraftstoffmasse sehr präzise bestimmen zu können, sieht die Erfindung vor, bei wenigstens einer Testeinspritzung die reale Einspritzmenge zu ermitteln und das Verhältnis zwischen realer und gewünschter Einspritzmenge in einem Lern-Kennfeld abzulegen. Dabei werden Testeinspritzungen vorgenommen, deren zeitlicher Abstand zur zeitlich vorhergehenden Einspritzung geändert wird. Auf diese Weise kann die Abweichung zur gewünschten Menge zu jedem zeitlichen Abstand beschrieben werden. Um einen Drehmomenteinfluss oder Geräuschbildung des Motors im Lernbetrieb zu vermeiden, werden diese Testeinspritzungen als späte Nacheinspritzungen realisiert. Die Bestimmung der realen Einspritzmenge geschieht auf nachfolgend näher beschriebene Weise.

Ein Lernbetriebskoordinator 130, der Teil eines Steuergerätes 200 ist, veranlasst die Ansteuerung des Injektors 102, mittels dem Kraftstoff während einer Nacheinspritzung QNE in einen Brennraum der Brennkraftmaschine 100 eingespritzt wird. Gleichzeitig wird die eingespritzte Luftmasse $m_L$ mittels des Heißfilmluftmassenmessers 104 ermittelt und die Luftzahl Lambda durch beispielsweise eine Lambdasonde 106 erfasst und aus diesen Größen in einer Recheneinheit 150 die tatsächlich eingespritzte Kraftstoffmasse mK, NE während der Nacheinspritzung berechnet. Auch diese Kraftstoffmasse mK, NE wird in dem Lernkennfeld 140 gespeichert. Die späte, nicht momentenwirksame Nacheinspritzung beeinträchtigt den Betrieb der Brennkraftmaschine nicht, führt aber zu einer Veränderung des Luftüberschusses.

Eine Änderung von Lambda aufgrund der Einspritzung kann durch die Beziehung

$$\text{Delta } (1/\text{Lambda}) = (14,5 \times mK, NE \times Eta)/mL,$$

wobei Eta eine einen Nachweisgrad definierende Größe darstellt, die beispielsweise empirisch ermittelt wird und dem Umstand Rechnung trägt, dass eine sehr späte Nacheinspritzung nicht mehr vollständig verbrennt und abhängig von der Ausführung der Lambda-Sonde 106 nur niedrige HC-Konzentrationen vollständig umsetzen und nachweisen kann. Das Maß für den Nachweisgrad Eta erlaubt eine eineindeutige Abbildung zwischen real eingespritzter Menge der Nacheinspritzung mK, NE und dem Lambdasignal.

Es wird nun die Differenz oder das Verhältnis aus der so ermittelten und der angeforderten Kraftstoffmasse QSoll der Nacheinspritzung ermittelt und in dem Lernkennfeld 140 gespeichert, dessen Koordinaten den jeweiligen Betriebspunkt BP des Einspritzventils hinreichend charakterisieren. Alternativ hierzu kann auch die gemessene Ist-Kraftstoffmenge QNE_L oder die zu der gemessenen Ist-Kraftstoffmasse gehörenden Ansteuerparameter abgespeichert werden. Äquivalent hierzu ist auch die Speicherung der gegenüber den nominellen Ansteuerparametern notwendige Korrektur dieser Parameter, um die gewünschte Einspritzmenge zu erreichen.

Das vorstehend beschriebene Verfahren wurde anhand der Einspritzung der Kraftstoffmasse in einen Brennraum einer mehrere Brennräume aufweisenden Brennkraftmaschine erläutert. Die Einspritzung in einen Brennraum ermöglicht es, ein injektorindividuelles Lern-Kennfeld 140 zu bestimmen.

Es versteht sich, dass das Verfahren hierauf nicht beschränkt ist.

Es ist vielmehr auch möglich, die Nacheinspritzung in allen Zylindern gleichzeitig vorzunehmen. Auf diese Weise kann die mittlere Abweichung aller Injektoren 106 vom Sollwert ermittelt werden und in dem Lern-Kennfeld 140 gespeichert werden.

Eine zweite Komponente der hier beschriebenen Funktion stellt die Anwendung des Gelernten dar. Hierzu wird abhängig von der aktuellen Wunsch-Einspritzmenge QSoll aus dem Lern-Kennfeld 140 ein Korrekturwert oder ein Korrekturfaktor ausgelesen und auch die Wunsch-Einspritzmenge berücksichtigt, beispielsweise durch Addition, Multiplikation oder dergleichen.

Dies geschieht in Rechenschritt 160. Hierdurch wird die ursprüngliche Wunsch-Einspritzmenge QSoll so verändert, dass die real eingespritzte Menge gerade wieder dem ursprünglichen Mengenwunsch entspricht.

Gleichzeitig wird der Korrekturwert, der dem Lern-Kennfeld 140 entnommen wird, einer Schaltungseinheit 141 zugeführt, in der mit Hilfe der Lernwerte beispielsweise eine Phasenkorrektur einer an sich bekannten und beispielsweise aus der DE 10 2004 053 418 A1 hervorgehenden Druckwellenkorrektur ausgeführt wird und durch direkte Eingriffe das Ansteuerdauerkennfeld 110 berücksichtigt wird. Hierzu können auch Lernwerte mit einem in der Schaltungseinheit 141 hinterlegten Modell zur Beschreibung von Druckwelleneffekten erweitert und abgeglichen werden, sodass nur wenige Lernstützstellen für diese Testeinspritzungen erforderlich sind. Diese Abweichungen werden bei der Ansteuerung, das heißt der Ansteuerdauer der Injektoren 102 berücksichtigt. Unter der Annahme, dass die Einspritzventile 102 zumindest lokal eine annähernd lineare Kennlinie aufweisen, kann auf diese Weise eine Korrektur der realen Einspritzmenge realisiert werden.

Das Maß für die eingespritzte Kraftstoffmasse kann die Kraftstoffmenge selbst sein, wie oben beschrieben. Es ist aber statt einer Abweichung zwischen der Soll- und der Ist-Kraftstoffmenge zur Bestimmung der korrekten Ist-Masse auch möglich, die notwendige Ansteuerdauerkorrektur zu ermitteln und abzuspeichern. Die Speicherung der Korrekturwerte der Ansteuerdauerkorrektur kann dabei ähnlich wie bei der sogenannten Nullmengenkorrektur erfolgen. Alternativ hierzu kann das Lernkennfeld so gestaltet werden, dass zu der ermittelten Ist-Kraftstoffmasse die benötigten Ansteuerparameter (z.B. Ansteuerdauer) oder die jeweilige Korrektur gegenüber den nominellen Ansteuerparametern abge-

speicher wird.

Welche der beiden Varianten tatsächlich eingesetzt wird, hängt auch von der erreichbaren Genauigkeit der beiden Varianten ab.

## Patentansprüche

1. Verfahren zur Bestimmung einer in wenigstens einen Brennraum einer Brennkraftmaschine (100) mittels wenigstens einer Einspritzung unter hohem Druck eingespritzten Kraftstoffmasse, **dadurch gekennzeichnet, dass** mittels eines Vergleichs eines Maßes für die Istmenge des eingespritzten Kraftstoffs wenigstens einer Testeinspritzung, die aufgrund eines Maßes für eine vorgegebene Sollmenge vorgenommen wird, und des Maßes für die Sollmenge eine Korrekturgröße für eine Druckwellenkorrektur festgelegt wird, dabei werden Testeinspritzungen vorgenommen, deren zeitlicher Abstand zur zeitlich vorhergehenden Einspritzung geändert wird.

2. Verfahren nach Anspruch 1, **dadurch gekennzeichnet, dass** die wenigstens eine Testeinspritzung als nicht momentenwirksame Nacheinspritzung vorgenommen wird.

3. Verfahren nach Anspruch 1 oder 2, **dadurch gekennzeichnet, dass** Testeinspritzungen mit veränderlichen zeitlichen Abständen und vorzugsweise zwischen zwei Einspritzungen abgesetzt werden und mittels der dabei festgelegten Korrekturgröße die Phasenlage einer Druckwellenkorrektur-Funktion angepasst wird.

4. Verfahren nach einem der Ansprüche 1 bis 3, **dadurch gekennzeichnet, dass** aufgrund der Korrekturgröße Änderungen in einem Ansteuerdauerkennfeld (110) vorgenommen werden.

5. Verfahren nach Anspruch 1, **dadurch gekennzeichnet, dass** das Maß für die Istmenge aus einem im Abgasbereich gemessenen Lambdasignal ermittelt wird.

6. Verfahren nach Anspruch 1, **dadurch gekennzeichnet, dass** das Maß für die Istmenge aus einer im Abgasbereich auftretenden berechneten Luftzahl Lambda ermittelt wird.

7. Verfahren nach Anspruch 1, **dadurch gekennzeichnet, dass** die Korrekturgröße im Rahmen eines Lernverfahrens ermittelt wird, das in vorgegebenen Betriebszuständen der Brennkraftmaschine durchgeführt wird.

8. Verfahren nach Anspruch 6, **dadurch gekennzeichnet, dass** die im Rahmen des Lernverfahrens ermittelten Korrekturgrößen und die Maße für die Istmengen des eingespritzten Kraftstoffs sowie für die Sollmengen des eingespritzten Kraftstoffs in einem Lern-Kennfeld (140) abgelegt werden.

9. Verfahren nach einem der vorstehenden Ansprüche, **dadurch gekennzeichnet, dass** das Maß für die eingespritzte Kraftstoffmasse die Kraftstoffmenge oder eine Ansteuerdauer eines Kraftstoffinjektors ist.

10. Verfahren nach einem der vorstehenden Ansprüche, **dadurch gekennzeichnet, dass** die Korrekturgröße aufgrund einer Nacheinspritzung in einen Brennraum einer wenigstens einen Brennraum aufweisenden Brennkraftmaschine (100) ermittelt wird.

11. Verfahren nach einem der Ansprüche 1 bis 9, **dadurch gekennzeichnet, dass** die Korrekturgröße aufgrund einer Nacheinspritzung in alle Brennräume einer mehrere Brennräume aufweisenden Brennkraftmaschine (100) ermittelt wird.

12. Vorrichtung zum Betreiben einer Brennkraftmaschine (100), **dadurch gekennzeichnet, dass** zumindest ein zur Durchführung des Verfahrens nach einem der vorhergehenden Ansprüche hergerichtetes Steuergerät (200) vorgesehen ist.

13. Vorrichtung nach Anspruch 11, **dadurch gekennzeichnet, dass** das Steuergerät (200) wenigstens einen Korrekturgrößenspeicher (140) aufweist, in welchem während des Lernverfahrens ermittelte Korrekturwerte hinterlegt werden.

14. Vorrichtung nach Anspruch 13, **dadurch gekennzeichnet, dass** der Korrekturgrößenspeicher ein Lern-Kennfeld (140) ist.

**Claims**

1.  Method for determining a fuel mass injected at high pressure into at least one combustion chamber of an internal combustion engine (100) by means of at least one injection, **characterized in that**, by means of a comparison of a value for the actual fuel quantity injected in at least one test injection, which is carried out on the basis of a value for a predefined setpoint quantity, and of the value for the setpoint quantity, a corrective variable for a pressure wave correction is defined, and here, test injections are carried out whose time interval with respect to the chronologically preceding injection is varied.

2.  Method according to Claim 1, **characterized in that** the at least one test injection is carried out as a post-injection which has no effect on torque.

3.  Method according to Claim 1 or 2, **characterized in that** test injections are offset at variable time intervals and preferably between two injections, and by means of the corrective variable thus defined, the phase position of a pressure wave corrective function is adapted.

4.  Method according to one of Claims 1 to 3, **characterized in that** changes are made in an activation duration characteristic map (110) on the basis of the corrective variable.

5.  Method according to Claim 1, **characterized in that** the value for the actual quantity is determined from a lambda signal measured in the exhaust-gas region.

6.  Method according to Claim 1, **characterized in that** the value for the actual quantity is determined from a calculated air ratio lambda occurring in the exhaust-gas region.

7.  Method according to Claim 1, **characterized in that** the corrective variable is determined during the course of a learning process which is carried out in predefined operating states of the internal combustion engine.

8.  Method according to Claim 6, **characterized in that** the corrective variables determined during the course of the learning process and the values for the actual quantities of the injected fuel and for the setpoint quantities of the injected fuel are stored in a learning characteristic map (140).

9.  Method according to one of the preceding claims, **characterized in that** the value for the fuel mass injected is the fuel quantity or an activation duration of a fuel injector.

10.  Method according to one of the preceding claims, **characterized in that** the corrective variable is determined on the basis of a post-injection into one combustion chamber of an internal combustion engine (100) which has at least one combustion chamber.

11.  Method according to one of Claims 1 to 9, **characterized in that** the corrective variable is determined on the basis of a post-injection into all the combustion chambers of an internal combustion engine (100) which has a plurality of combustion chambers.

12.  Device for operating an internal combustion engine (100), **characterized in that** at least one control unit (200) is provided which is set up to carry out the method according to one of the preceding claims.

13.  Device according to Claim 11, **characterized in that** the control unit (200) has at least one corrective variable memory (140) in which corrective variables determined during the learning process are stored.

14.  Device according to Claim 13, **characterized in that** the corrective variable memory is a learning characteristic map (140).

**Revendications**

1.  Procédé pour déterminer une quantité de carburant injectée dans au moins une chambre de combustion d'un moteur à combustion interne (100) au moyen d'au moins une injection à haute pression, **caractérisé en ce que** l'on établit au moyen d'une comparaison d'une mesure de la quantité réelle de carburant injectée d'au moins une injection d'essai, qui est effectuée sur la base d'une mesure d'une quantité de consigne prédéterminée, et de la mesure de la quantité de consigne, une valeur de correction pour une correction d'ondes de pression, des injections d'essai étant effectuées, en faisant varier leur intervalle temporel par rapport à l'injection précédente.

**2.** Procédé selon la revendication 1, **caractérisé en ce que** l'au moins une injection d'essai est effectuée sous forme d'injection ultérieure non instantanément effective.

**3.** Procédé selon la revendication 1 ou 2, **caractérisé en ce que** des injections d'essai sont étagées avec des intervalles temporels différents et de préférence entre deux injections et la position de phase d'une fonction de correction d'ondes de pression est adaptée au moyen de la valeur de correction ainsi établie.

**4.** Procédé selon l'une quelconque des revendications 1 à 3, **caractérisé en ce que** l'on effectue des variations dans un champ caractéristique de durées de commande (110) sur la base de la valeur de correction.

**5.** Procédé selon la revendication 1, **caractérisé en ce que** la mesure de la quantité réelle est déterminée à partir d'un signal Lambda mesuré dans la région des gaz d'échappement.

**6.** Procédé selon la revendication 1, **caractérisé en ce que** la mesure de la quantité réelle est déterminée à partir d'un indice d'air Lambda calculé se produisant dans la région des gaz d'échappement.

**7.** Procédé selon la revendication 1, **caractérisé en ce que** la valeur de correction est déterminée dans le cadre d'un procédé d'apprentissage, qui est mis en oeuvre dans des états de fonctionnement prédéterminés du moteur à combustion interne.

**8.** Procédé selon la revendication 6, **caractérisé en ce que** les valeurs de correction déterminées dans le cadre du procédé d'apprentissage et les mesures des quantités réelles de carburant injecté ainsi que des quantités de consigne de carburant injecté sont saisies dans un champ caractéristique d'apprentissage (140).

**9.** Procédé selon l'une quelconque des revendications précédentes, **caractérisé en ce que** la mesure de la quantité de carburant injectée est la quantité de carburant ou une durée de commande d'un injecteur de carburant.

**10.** Procédé selon l'une quelconque des revendications précédentes, **caractérisé en ce que** la valeur de correction est déterminée sur la base d'une post-injection dans une chambre de combustion d'un moteur à combustion interne (100) présentant au moins une chambre de combustion.

**11.** Procédé selon l'une quelconque des revendications 1 à 9, **caractérisé en ce que** la valeur de correction est déterminée sur la base d'une post-injection dans toutes les chambres de combustion d'un moteur à combustion interne (100) présentant plusieurs chambres de combustion.

**12.** Dispositif pour faire fonctionner un moteur à combustion interne (100), **caractérisé en ce qu'**au moins un appareil de commande (200) prévu pour mettre en oeuvre le procédé selon l'une quelconque des revendications précédentes est prévu.

**13.** Dispositif selon la revendication 11, **caractérisé en ce que** l'appareil de commande (200) présente au moins une mémoire de valeurs de correction (140), dans laquelle sont déposées des valeurs de correction déterminées pendant le procédé d'apprentissage.

**14.** Dispositif selon la revendication 13, **caractérisé en ce que** la mémoire de valeurs de correction est un champ caractéristique d'apprentissage (140).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200600530 A1
- DE 102004053418 A1

- DE 102005036193 A1